# EUROPEAN PATENT APPLICATION

(11) **EP 0 876 934 A1**
(43) Date of publication of application: **11.11.1998**
(21) Application number: 97500176.9
(22) Date of filing: 24.10.1997
(51) Int. Cl.: B60K 20/02

(54) **Gear shift lever for a motor vehicle**

(30) Priority: 25.10.1996 ES 9602731 U
(71) Applicant: Jimenez Palma, Antonio M., 29013 Malaga (ES)
(72) Inventor: Jimenez Palma, Antonio M., 29013 Malaga (ES)

(57) **Abstract**

Gear shift lever (1) for vehicles, comprising a lamp (10) covered by a transparent badge on its superior end. The lamp carrier (2) is constituted by a cylinder (3) provided with connectors (7) for cables (8) and inwardly with a case (9) for the corresponding lamp (10).

## Description

### DESCRIPTIVE MEMORY

### I OBJECT OF THE INVENTION

The present invention refers to lever of changes for vehicles that it contributes essential characteristics of novelty with regard to the similar means and used in the current means of the technique.

In general lines, the invention has developed to lever of changes for vehicles whose structure allows its perfect signaling and visualization of the outline of the you go on the part of the driver, so much by day ace at night.

Bonus concretely, the present invention presents an incorporates structure to the levers of conventional changes, with the help of to luminous point fed by the own battery of the vehicle.

### ANTECEDENTS OF THE INVENTION

It is known in general the existence in the market of to plurality of levers of changes that present in their free end to hilt embellish on whose basis or superior area prepares the outline of the you go.

This type of levers of change, they present the inconvenience that their positioning in the different goes, it is only detected, for the driver by means of the tact or for the reflective material with which one draws the outline of the goes, when it is circulating at night. Anyway, during the day conduction, the lever of changes is only detected by the driver by means of the tact, that that undoubtedly subtraction agility in the conduction, when getting lost tenth in fundamental second for the security in the conduction of the vehicles.

### DETAILED DESCRIPTION OF THE REALIZATION PREFERABLE OF THE INVENTION

The detailed description that continues of the preferable realization of the invention, will be carried based the annexed drawings, in those that the corresponding or similar parts have been marked with the same numeric references along the diverse figures.

Ace it dog be observed tenor of the commented plans, the lever of changes (1) it prepares coupled in their superior area to bulb - holder (2) built by to cylinder (3) of provided superior mouthpiece of to trumpeted (4) interior and an to stagger (5) provided external of to thread area (6), while in the inferior mouthpiece, the cylinder (3)dispone of the connections (7) for the cables (8) coming from the battery of the vehicle for the interior of the lever (1) and for the marries (9) of the lamp (10) willing inside the cylinder (3). The cylinder (3) it presents in their external half surface an area (11) of thread, in which the threaded area is coupled (12) it interns of to necklace (16). On the threaded area (6) external of the superior embocadura of the cylinder (3), the is also coupled threaded area (17) interior of to cover (18), provided of an external to stagger (19) in their inferior mouthpiece, while in their superior mouthpiece has receives the joining ofto translucent sheet (20).

The group of the bulb - holder (2) it is willing on the superior end of the lever (1), supported by the inferior mouthpiece of the necklace (13) and retained by the hilt that embellish (21),configurada by means of to body invested trunk conical lacking their bases and in whose bigger embocadura or superior presents to joining of to badge (22) of translucent nature.

Based on this described structure, the bulb of the bulb - holder when being connected with the battery of the own vehicle, with the interference of the corresponding connected switch to the setting in march of the vehicle, will allow that the lever of changes is continually illuminated, so much by day ace at night, when working the setting in march of the vehicle and for so much perfectly signalled for the driver with independence of the situation of the lever in anyone of the goes, what will allow the user's smaller effort in the conduction of the vehicle and redounding in to bigger easiness and comfort in the conduction.

### DESCRIPTION OF THE INVENTION

The present invention consists on to lever of change for vehicles that it allows its perfect visual location for the driver, so much day ace nightly and that in general lines it presents in its superior area the incorporation of to point of light fed by the own battery of the vehicle and that it is covered for to hilt embellish, with its superior translucent bases and where it incorporates the outline of the you go. Concretely the point of light is configured by means of an it carries lamps adapted to the superior area of the lever, connected with the own battery of the vehicle and retained in its position by the hilt embellish that has superior its it bases carried out in to material translucent. Everything will be explained to it with lives detail along the description that you continue.

### BRIEF DESCRIPTION OF THE DRAWINGS

The description of the object of the invention will be carried out being based on the drawings that plows accompanied, in those that to I title of example and without limitative character some therefore, to favorite form of realization has been presented. In such drawings the following thing there is been represented:

The figures first sample to view in perspective of the lever of changes for vehicles object of the present invention.

Lastly, the figures second corresponds to view in diametrical section of the first it figures.

This signaling also allows the observation of the outline of the goes that is carried out on the external face of the translucent badge (22).

It is not considered necessary or to make lives extensive the content of the present description so that an expert in the matter dog understand his reach and to carry out the practical realization of the described object.

Nevertheless and since what precedes to form of favorite realization of the object of the invention there is only been described, it is evident that inside of the primitive prototype will be been able to introduces multiple variations, without it supposes it alteration some of the invention. Such modifications will be able to:

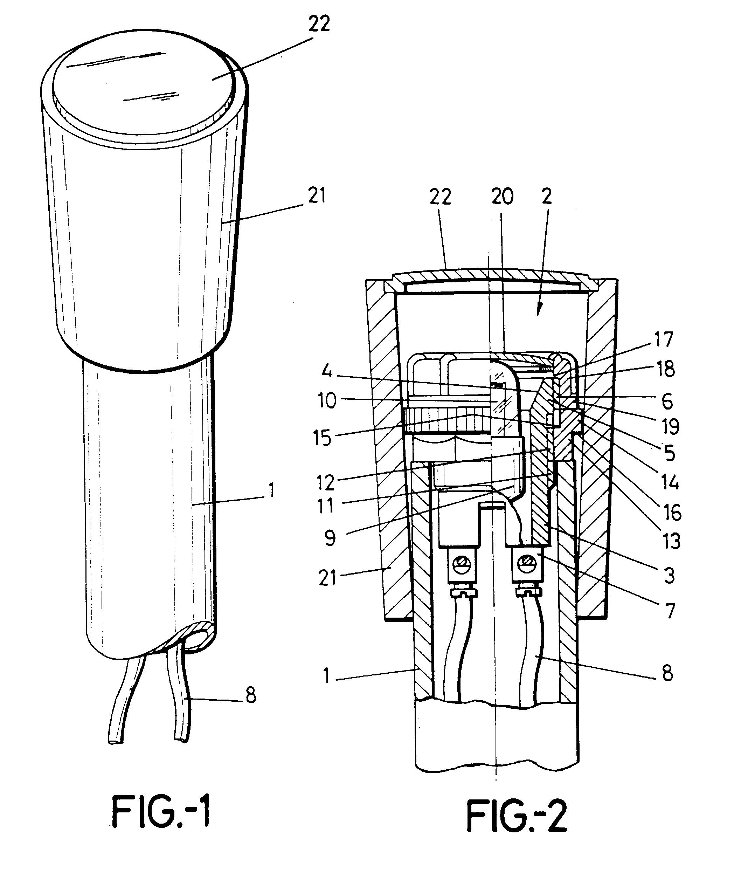

## Claims

1. PALANCA OF CHANGES FOR VEHICLES that essentially is characterized to understand in their superior area the incorporation of an it carries lamps, connected by means of the corresponding cables with the hilt embellish, of configuration preferably invested trunk conical lacking their bases that in their bigger mouthpiece or superior presents the joining of to translucent badge located on the bulb - holder in the disposition on this of the hilt and that embellish.

2. LEVER OF CHANGES FOR VEHICLES, according to the first characterized recovery because the one carries lamps it is constituted by means of to cylinder with their provided mouthpiece of connectors for cables and inwardly with to she/he marries for the corresponding bulb, while in their superior mouthpiece it is trumpeted inwardly and outwardly it there is an to stagger with their external surface threaded in the one that the interior area is also coupled threaded of to cover in whose superior mouthpiece receives the joining of to translucent sheet, the cover provided in its inferior embocadura being, of an escalonamiento that is susceptible of contacting with the salient one to annul of the superior mouthpiece of to necklace threaded inwardly and that she/he also moves for the area threaded prepared in the external half area of the cylinder, being the inferior mouthpiece of the necklace the one that settles on the superior area of the lever, when being retained the one carries lamps for the hilt that embellish.
